# EUROPEAN PATENT SPECIFICATION

(11) **EP 1 425 957 B1**
(45) Date of publication and mention of the grant of the patent: **21.05.2008**
(21) Application number: 03078826.9
(22) Date of filing: 04.12.2003
(51) Int. Cl.: A01G 9/02

(54) **System of modules and module as part of this system**
Modularsystem und dazu gehörendes Modul
Ensemble de modules et module en faisant partie

(30) Priority: 04.12.2002 NL 1022082
(43) Date of publication of application: 09.06.2004
(73) Proprietor: Booiman, Henderik, 9411 TR Beilen (NL)
(72) Inventor: Booiman, Henderik, 9411 TR Beilen (NL)

(56) References cited:
- EP-B- 0 283 542
- WO-A-00/76295
- FR-A- 2 713 884
- GB-A- 2 055 281
- GB-A- 2 177 889
- NL-A- 8 801 579
- US-A- 2 193 425
- US-A- 4 961 284

## Description

The invention relates to a system of modules intended to be combined for realising constructions like a barrier or a noise barrier, at least partly made of metal netting, onto or alongside of which plants may grow, suitable to be placed round and inside gardens, comprising at least substantially closed modules with a trapezial cross section, an inside of which is coverend with a foil or a cloth made of a natural or a synthetic material.

A module of this type is known from EP-A-0 283 542. The known module consists of a complicated mechanical construction, which supports the metal netting and which also comprises connecting means for connecting to neighbouring modules.

The problem with the known module is that it expensive. An elevated price might be acceptable when only one type of module is to be developed, produced, stored and sold, but if a system of a number of different types of modules is to be sold, the modules must be really inexpensive. The system according to the invention is characterised in that it comprises wall modules, corner modules, T-shaped modules, cross-shaped modules, pillars and beams, made of a metal netting, folded and welded together. Obviously, these modules may be manufactured cheaply, while they cannot be distinguished from the known modules, once they are grown over.

From FR-A-2713884 supports for plants are known having different shapes, but these supports are not intended to be combined in order to form constructions. Moreover these supports consist of a skeleton, covered with wire-netted panels.

A favourable embodiment is characterised in that a top side of the modules is not covered. The modules will remain nontransparent in this way, but the advantage is that the modules can easily be filled at least partly, with a nutrient medium for plants and possibly with filling material, before or after they are put in place, in which case the modules also form a very effective noise barrier.
An additional advantage is that a medium of this kind can store large amounts of water, which means that the overgrown modules will withstand a dry period rather well.
The advantage of filling the modules before they are placed is that modules may be delivered which have been overgrown already, which means that for example a garden will look finished right away. The advantage of filling the modules after they have been placed is that the modules can be moved and put in place easily, as they are still rather light.

A further favourable embodiment characterised in that the modules are filled with garden mould or potting compost, to which nutrients have been added, so that the overgrown modules may last for many years, without needing any form of maintenance.

A further favourable embodiment with which modules can be put together in such a way that very tight rows are obtained is characterised in that the modules are provided with coupling means for coupling to adjacent modules. The coupling means can be of a very simple nature, because once the modules have been placed, the vegetation will provide for a permanent coupling. A favourable embodiment is therefore characterised in that the coupling means comprise at least two pins, projecting from a surface of a module which abuts against another module.

The invention also relates to a module, shaped from metal netting like reinforcing steel mats and having a substantially trapezially shaped cross section, as part of a system as described above. Preferably, the inside of the module is covered with a foil or a cloth made of a natural or synthetic material and the module is at least partly filled with a nutrient medium for plants and possibly with filling material.

The invention will now be further explained with a reference to the following figures, in which:
- Fig. 1: represents two modules according to the invention, shown in perspective;
- Fig. 2A: represents a possible embodiment provided with a coupling in front view;
- Fig. 2B: represents this coupling in top view;
- Fig. 3A: represents a universal module in front view;
- Fig. 3B: represents an end module provided with a sloping end surface;
- Fig. 3C: represents a composite gate in front view;
- Fig. 3D: represents a module provided with a passage in front view;
- Fig. 4A: represents a rectangular corner module in top view;
- Fig. 4B: represents a T-shaped module;
- Fig. 4C: represents a cross-shaped module in top view;
- Fig. 4D: represents an arc-shaped module in top view.

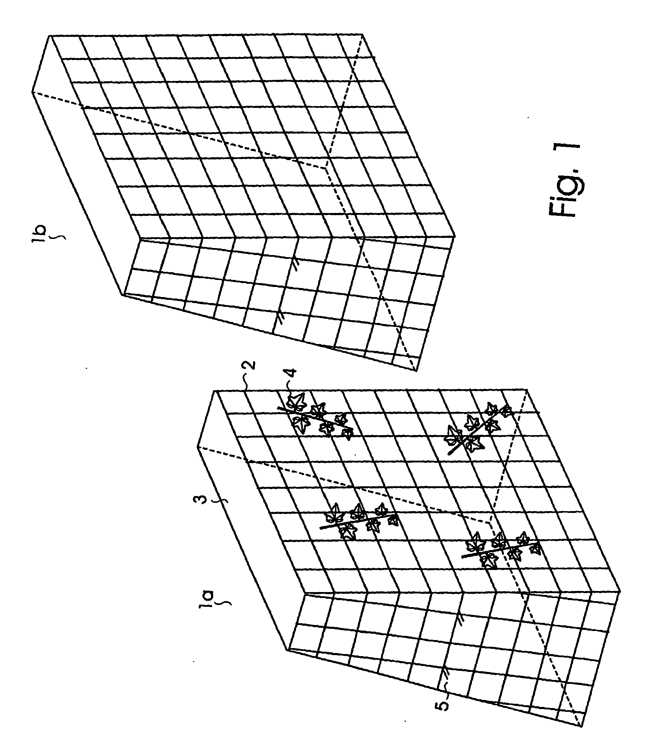

Fig. 1 represents two modules 1a, 1b according to the invention, shown in perspective, each consisting of an external skeleton, here made of reinforcing steel mats 2 which have been folded and welded together in an obvious manner and an inside of which is provided with a covering 3, for example a foil or a cloth made of a natural or synthetic material. The modules are filled with garden mould or potting compost, to which preferably a buffer stock of nutricients has been added and plants 4 are planted in the modules via openings, made in covering 3.
A very suitable plant is ivy, which grows fast and which practically hides the actual modules from view in no time. In addition, the ivy soon fills the entire module with a dense root system, which adds to the strength of the module and which makes covering 3 in fact redundant. Other plants may if desired be used as well, for example annual plants like ivy-leaved geraniums on a sunny side of the modules, which may increase a decorative effect of the modules. It is also possible to realise a structure with only skeletons, after which plants 4 can be planted into the soil underneath. By selecting suitable climbers, one may obtain a situation in which the skeletons are completely covered and anchored to the ground, resulting in an solid looking and still open partition. In order to prevent the modules 1a,1b,.. from shifting among themselves, they may be provided with couplings 5. The modules may be produced with a top side left open, which is convenient while filling or topping up the modules, but the top side may if desired be closed with reinforcing steel mat, for example when they will not be filled with potting compost. Usually, the top side of a module is not provided with a covering, because it would have no function whatsoever.

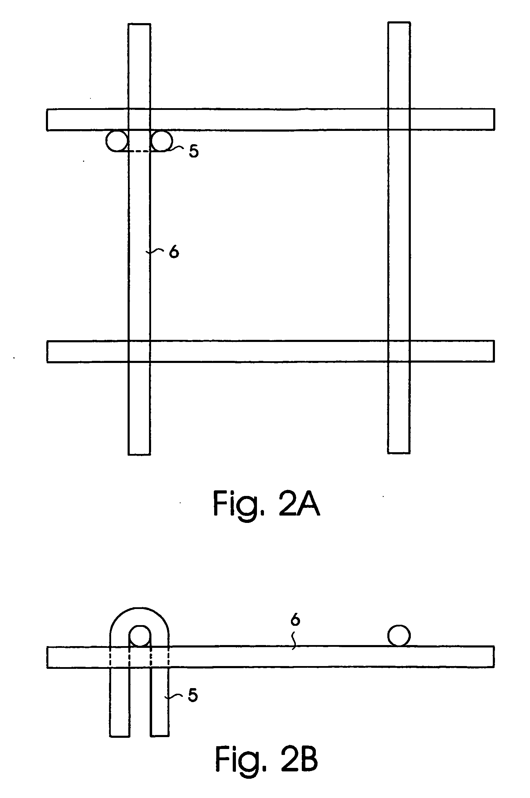

Fig. 2A represents a possible embodiment provided with a coupling 5 in front view, in this embodiment consisting of a piece of reinforcing steel bent to a U-shape, which is shifted onto reinforcing steel mat 6 and fixed, for example spot welded. Fig. 2B represents this coupling 5 in top view. It is immediately clear that modules, coupled in this manner, must be located precisely one behind the other, while in a longitudinal direction some freedom of movement is maintained.

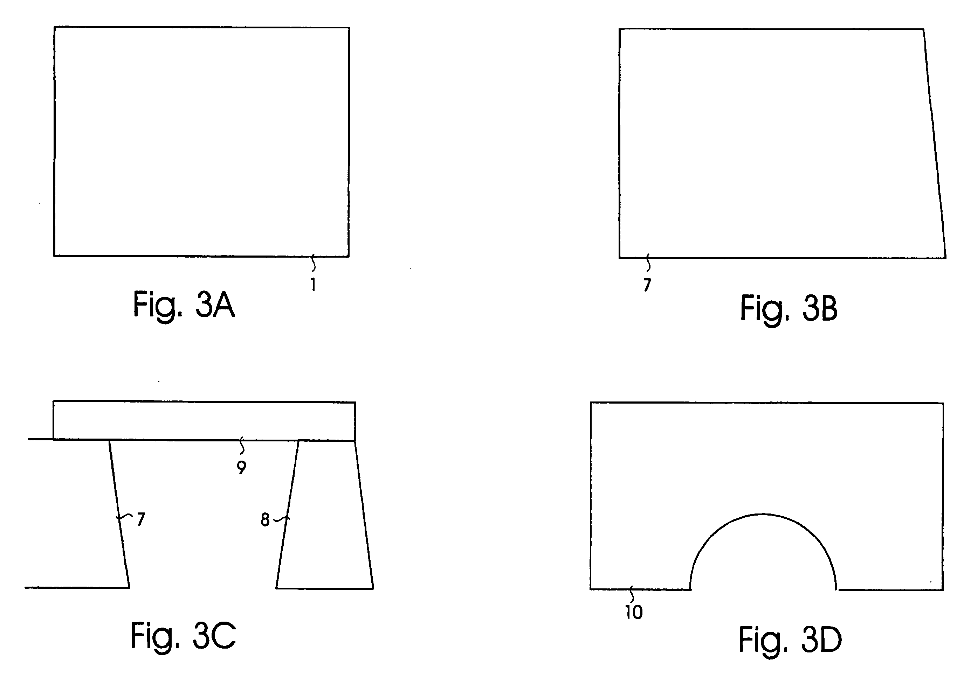

Fig. 3A represents a universal module 1 in front view, with which an enclosure may be realised in a further obvious manner by coupling a sufficiently large number of these modules. The modules each have a length of for example 1,5 metre and a height of 1,8 metre. On a top side, the thickness is for example 0,2 metre and on the bottom side for example 0,6 metre. With these dimensions the modules are easy to handle, even when filled with potting compost, and if desired they may be delivered and placed covered with for example ivy. For a relatively long barrier, some selected modules may be given a slightly smaller height, which makes the partition visually more attractive.

Fig. 3B represents an end module provided with a sloping end surface, which may be used for finishing off an end of a barrier.

Fig. 3C represents a composite gate in front view, consisting of a module 7 and a module 8 shaped as pillars, onto which a module 9 rests shaped as a beam. Of course also two modules 7 can be coupled with a beam 9, or beam 9 may rest onto two pillars 8, in which cases also a gate will be realised.

Fig. 3D represents a module 10 provided with a passage in front view, via which passage for example animals may pass the barrier.

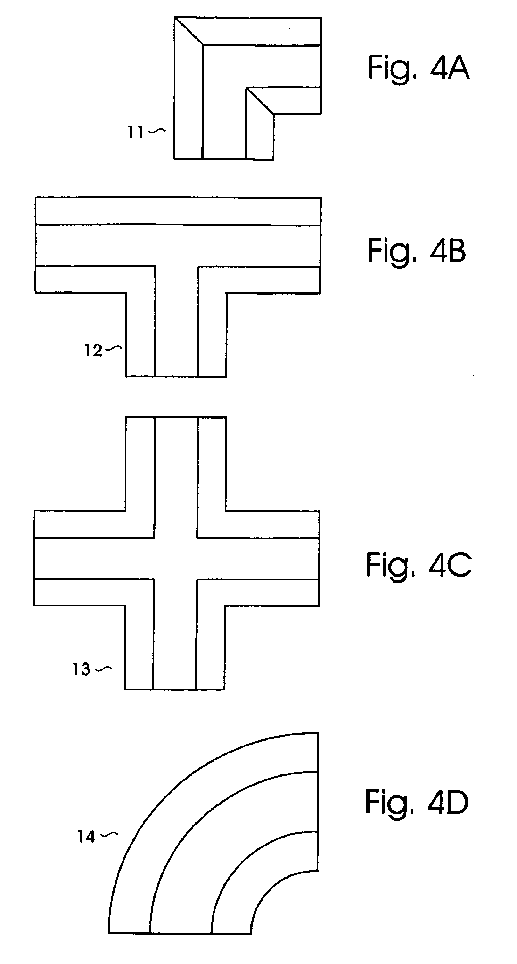

Fig. 4A represents a rectangular corner module 11 in top view, with the aid of which a corner can be realised in a barrier in a further obvious manner.

Fig. 4B represents a T-shaped module 12 and Fig. 4C represents a cross-shaped module 13 in top view. It is immediately clear that relatively complex structures may be realised in a simple manner with the aid of these modules.

Fig. 4D represents an arc-shaped module 14 in top view, suitable for realising an angle of ninety degrees. Arc-shaped elements of this type can simply be cut out of reinforcing steel mat and welded together, for obtaining any desired angle. Together with universal modules 1, fine building structures may be obtained in this way.

A building structure realised with modules according to the invention tends to hold moisture rather well, which means that active watering will generally not be necessary. If desired, a known irrigation system consisting of a hose provided with perforations may be placed on top of the structure, with which the plants in the structure can be kept in shape during a prolonged period of dryness.

## Claims

1. System of modules (1) intended to be combined for realising constructions like a barrier or a noise barrier, at least partly made of metal netting (2), onto or alongside of which plants (4) may grow, suitable to be placed round and inside garden, comprising at least substantially closed modules (1) with a trapezial cross section, an inside of which is coverend with a foil or a cloth (3) made of a natural or a synthetic material, **characterised in that** the system comprises wall modules (1), corner modules (11), T-shaped modules (12), cross-shaped modules (13), pillars (7,8) and beams (9), made of a metal netting (2), folded and welded together.

2. System according to claim 1, **characterised in that** a top side of the modules (1, 7,..,14) is not covered.

3. System according to claim 1 or 2, **characterised in that** the modules (1, 7,..,14) are at least partly filled with a nutrient medium for plants (4) and possibly with filling material.

4. System according to claim 3, **characterised in that** the modules (1, 7,..,14) are filled with garden mould or potting compost, to which nutrients have been added.

5. System according to claim 1, **characterised in that** the modules (1, 7,..,14) are provided with coupling means (5) for coupling to adjacent modules (1, 7,..,14).

6. System according to claim 5, **characterised in that** the coupling means (5) comprise at least two pins, projecting from a surface of a module (1, 7,..,14) which abuts against another module (1, 7,..,14).

7. Module shaped from metal netting (2) like reinforcing steel mats and having a substantially trapezially shaped cross section, as part of a system according to one of the claims 1 to 6.

8. Module (1, 7,..,14) according to claim 7, **characterised in that** an inside of the module is covered with a foil or a cloth (3) made of a natural or synthetic material.

9. Module (1, 7,..,14) according to claim 8, **characterised in that** the module (1, 7,..,14) is at least partly filled with a nutrient medium for plants and possibly with filling material.

## Patentansprüche

1. Modularsystem und dazu gehörendes Modul aus Bauelementen (1) für das in Kombination Realisieren von Konstruktionen, wie beispielsweise einem Trennmittel oder einem Lärmschutzwall, zumindest zum Teil aus Metallgaze (2) hergestellt, auf denen oder an denen Pflanzen (4) wachsen können, geeignet für die Anbringung rund um und in Gärten, bestehend aus zumindest im Wesentlichen geschlossenen, im Querschnitt trapezförmigen Bauelementen (1), an einer Innenseite mit einer Folie oder einem Tuch (3) verkleidet, hergestellt aus einem organischen oder synthetischen Material, **dadurch gekennzeichnet, dass** das Modularsystem Wandelemente (1), Eckelemente (11), T-förmige Elemente (12), kreuzförmige Elemente (13), Pfosten (7,8) und Balken (9) umfasst, hergestellt aus gefalteter und zusammengeschweißter Metallgaze (2).

2. Modularsystem gemäß Anspruch 1, **dadurch gekennzeichnet, dass** eine Oberseite der Bauelemente (1,7,..,14) nicht verkleidet ist.

3. Modularsystem gemäß Anspruch 1 oder 2, **dadurch gekennzeichnet, dass** die Bauelemente (1,7,..,14) zumindest teilweise mit einem Nährboden für Pflanzen (4) und möglicherweise mit Füllmitteln gefüllt sind.

4. Modularsystem gemäß Anspruch 3, **dadurch gekennzeichnet, dass** die Bauelemente (1,7,..,14) mit Humus oder Blumenerde gefüllt sind, denen Nährstoffe zugefügt worden sind.

5. Modularsystem gemäß Anspruch 1, **dadurch gekennzeichnet, dass** die Bauelemente (1,7,..,14) mit Verbindungsmitteln (5) versehen sind, so dass sie mit angrenzenden Bauelementen (1,7,..,14) verbunden werden können.

6. Modularsystem gemäß Anspruch 5, **dadurch gekennzeichnet, dass** die Verbindungsmittel (5) zumindest zwei, aus einer Fläche eines Bauelements (1,7,..,14) herausragende Stifte umfassen, welches Bauelement an ein anderes Bauelement (1,7,..,14) grenzt.

7. Bauelement aus Metallgaze (2) gefertigt, wie beispielsweise Betonstahlmatten, mit einem zumindest im Wesentlichen trapezförmigen Querschnitt, als Teil eines Systems gemäß einem der Ansprüche 1 bis einschl. 6.

8. Bauelement (1,7,..,14) gemäß Anspruch 7, **dadurch gekennzeichnet, dass** das Bauelement (1,7,..,14) an der Innenseite mit einer Folie oder einem Tuch (3) verkleidet ist, hergestellt aus einem organischen oder synthetischen Material.

9. Bauelement (1,7,..,14) gemäß Anspruch 8, **dadurch gekennzeichnet, dass** das Bauelement (1,7,..,14) zumindest teilweise mit einem Nährboden für Pflanzen und möglicherweise mit Füllmitteln gefüllt ist.

## Revendications

1. Ensemble de modules (1) pour realiser en combinaison des constructions comme une barrière où un écran antibruit, au moins en partie fabriqué de toile métallique (2) sur laquelle où le long laquelle des plantes (4) peuvent végéter, adapté pour être placé autour et dans des jardins, comprennant des modules au moins principalement fermés, avec une section trapèziale (1), un interieur couvert d'un feuil où drap (3) fabriqué d'une matière organique où synthetique, **caractérisé en ce que** l'ensemble comprends des éleménts mural (1), des éléments angueux (11), des éléments en forme d'un T (12), des éléments crusiforme (13), des pilliers (7,8) et des solives (9), fabriqué de toile métallique (2), plié et soudé ensemble.

2. Ensemble tel que revendiqué à la revendication 1, **caractérisé en ce** q'un côté supérieur des modules (1,7,..,14) n'est pas couvert.

3. Ensemble tel que revendiqué à la revendication 1 où 2, **caractérisé en ce que** les modules (1,7,..,14) sont au moins en partie remplis d'une nourriture végétale (4) et possiblement de remplisage.

4. Ensemble tel que revendiqué à la revendication 3, **caractérisé en ce que** les modules (1,7,..,14) sont remplis de terreau ou terre à poterie, à quoi de la nourriture est ajouté.

5. Ensemble tel que revendiqué à la revendication 1, **caractérisé en ce que** les modules (1,7,..,14) sont prévus des moyens d'accouplement (5) si bien qu'ils peuvent être couplés avec des modules (1,7,..,14) voisins.

6. Ensemble tel que revendiqué à la revendication 5, **caractérisé en ce que** les moyens d'accouplement (5) comprennent au moins deux chevilles, qui saillent d'un plan d'un module (1,7,..,14) adjacent d'un autre module (1,7,..,14).

7. Module fabriqué de toile métallique (2), comme de toile à béton, avec une section au moins sensiblement trapèziale, faisant partie d' un ensemble tel que revendiqué à la revendications 1,2,3,4,5 où 6.

8. Module (1,7,..,14) tel que revendiqué à la revendication 7, **caractérisé en ce que** l'interieur du module (1,7,..,14) ) est couvert d'un feuil où drap (3) fabriqué d'une matière organique où synthetique.

9. Module (1,7,..,14) tel que revendiqué à la revendication 8, **caractérisé en ce que** le module (1,7,..,14) est au moins en partie rempli d'une nourriture végétale et possiblement de remplisage.
